# EUROPEAN PATENT APPLICATION

(11) **EP 4 814 879 A1**
(43) Date of publication of application: **30.09.2026**
(21) Application number: 25763902.1
(22) Date of filing: 23.04.2025
(51) Int. Cl.: G06T 17/20, G06F 30/00

(54) **MESHING METHOD AND SYSTEM FOR IMPLICIT REPRESENTATION MODEL, COMPUTER DEVICE, COMPUTER-READABLE STORAGE MEDIUM, AND COMPUTER PROGRAM PRODUCT**

(30) Priority: 27.01.2025 CN 202510126074
(71) Applicant: Shanghai Voxeldance Technology Co., Ltd., Shanghai 201601 (CN)
(72) Inventor: WANG, Song, Shanghai 201601 (CN); ZHANG, Chaoxin, Shanghai 201601 (CN); WANG, Siwei, Shanghai 201601 (CN)
(74) Representative: Weickmann & Weickmann PartmbB
(86) International application number: PCT/CN2025/090605
(87) International publication number: WO 2026/157048

(57) **Abstract**

The present application provides a method and system for meshing an implicit representation model, a computer apparatus, a computer-readable storage medium, and a computer program product. The meshing method includes the following steps: creating a bounding space with a preset resolution, the bounding space fully bounds an implicit representation model; meshing the bounding space level-by-level, including: determining a value interval of an implicit representation for each of sub-meshes at a current level to perform a next-level meshing on each sub-mesh whose value interval contains a threshold interval in a recursive manner until all sub-meshes at a current level satisfying the preset resolution; and selecting a sub-mesh whose value interval of the implicit representation contains the threshold interval from the sub-meshes that satisfy the preset resolution as a key mesh to perform numerical filling and generate a meshing model.

## Description

### TECHNICAL FIELD

The present application relates to the field of 3D printing, and specifically to a method and system for meshing an implicit representation model, a computer apparatus, a computer-readable storage medium, and a computer program product.

### BACKGROUND

Implicit modeling is widely used in 3D printing, computer-aided design (CAD), and other fields. There are many advantages in the implicit model which are constructed through implicit modeling. For example, the implicit model constructed through implicit modeling can have smooth surfaces and complex structures, allow for effortless Boolean operations, and make the accuracy thereof being independent of resolution.

However, when implicit modeling is applied in the field of 3D printing, the implicit model cannot be input into most of current 3D printing-related softwares (e.g., CAE software, and preprocessing software for 3D printing) directly due to format constraints for input model or format constraints for input model to be rendered during model rendering. The implicit model needs to be converted to a compatible mesh model. For example, for CAE software, the implicit model needs to be converted to a voxel mesh model required for CAE software. For another example, for preprocessing software, the implicit model needs to be converted to a triangular mesh model. However, the process of converting the implicit model to the mesh model involves a significant amount of computation, resulting in slow computational speed.

Therefore, how to improve the computational speed of converting the implicit model to the mesh model is a technical problem to be solved urgently.

### SUMMARY OF THE INVENTION

In view of the above disadvantages in the related art, an objective of the present application is to provide a method and system for meshing an implicit representation model, a computer apparatus, a computer-readable storage medium, and a computer program product, so as to overcome the above technical problem of how to improve the computational speed of converting the implicit model to the mesh model in the related art.

To achieve the above objective and other related objectives, a first aspect disclosed in the present application discloses a method for meshing an implicit representation model, the meshing method includes the following steps: creating a bounding space with a preset resolution, the bounding space fully bounds an implicit representation model; meshing the bounding space level-by-level, including: determining a value interval of an implicit representation for each of sub-meshes at a current level to perform a next-level meshing on each sub-mesh whose value interval contains a threshold interval in a recursive manner until all sub-meshes at a current level satisfying the preset resolution; and selecting a sub-mesh whose value interval of the implicit representation contains the threshold interval from the sub-meshes that satisfy the preset resolution as a key mesh to perform numerical filling and generate a meshing model.

A second aspect of the present application discloses a system for meshing an implicit representation model, the meshing system includes: a bounding space creation module, configured to create a bounding space with a preset resolution, the bounding space fully bounds an implicit representation model; a meshing and filling module, configured to mesh the bounding space level-by-level, including: determining a value interval of an implicit representation for each of sub-meshes at a current level to perform a next-level meshing on each sub-mesh whose value interval contains a threshold interval in a recursive manner until all sub-meshes at a current level satisfying the preset resolution; and further configured to select a sub-mesh whose value interval of the implicit representation contains the threshold interval from the sub-meshes that satisfy the preset resolution as a key mesh and perform numerical filling; and a conversion module, configured to generate a meshing model based on the meshed and filled bounding space .

A third aspect of the present application discloses a computer apparatus, the computer apparatus includes: a storage device, configured to store at least one program; and a processing device, connected with the storage device, and configured to implement the method for meshing an implicit representation model according to the first aspect of the present application when invoking the at least one program from the storage device and executing the at least one program.

A fourth aspect of the present application discloses a computer-readable storage medium, the computer-readable storage medium stores at least one program, wherein the method for meshing an implicit representation model according to the first aspect of the present application is implemented when the at least one program is invoked and executed by a processor of a computer.

A fifth aspect of the present application discloses a computer program product, when the computer program product is executed on a computer, the computer performs the method for meshing an implicit representation model according to the first aspect of the present application.

In summary, in the method and system for meshing an implicit representation model, the computer apparatus, the computer-readable storage medium, and the computer program product disclosed in the present application, in a process of meshing a bounding space that can fully bounds an implicit representation model level-by-level, a next-level meshing is performed only on each sub-mesh whose value interval contains a threshold interval until each sub-mesh at the current level satisfying a preset resolution, and a sub-mesh whose value interval of an implicit representation contains the threshold interval can be selected from the sub-meshes that satisfy the preset resolution as a key mesh so as to perform numerical filling and to generate a meshing model, such that the amount of computation for converting the implicit representation model (referred to as implicit model or implicit representation-based model) to the mesh model can be reduced and the computational speed of converting the implicit representation model to the mesh model can be improved.

### BRIEF DESCRIPTION OF DRAWINGS

The characteristics and advantages of the invention in the present application can be better understood with reference to the exemplary embodiments and the accompanying drawings described below in detail. The accompanying drawings are briefly described below.
FIG. 1 is a schematic flowchart of a method for meshing an implicit representation model according to an embodiment of the present application;
FIG. 2 is a schematic diagram of a parameter configuration window according to an embodiment of the present application;
FIG. 3 is a schematic diagram of a bounding space and the bounding space being initially meshed according to an embodiment of the present application;
FIG. 4 is a schematic diagram of a sub-mesh being uniformly subdivided with length and width directions of the sub-mesh as directions in which the uniform subdivision is feasible according to an embodiment of the present application;
FIG. 5 is a schematic diagram of a sub-mesh being uniformly subdivided with a length direction of the sub-mesh as a direction in which the uniform subdivision is feasible according to an embodiment of the present application;
FIG. 6 is a schematic diagram of sub-meshes whose value interval of an implicit representation contain a threshold interval in the embodiment shown in FIG. 3 being next-level meshed;
FIG. 7 to FIG. 9 are schematic diagrams of a relative position relationship between a key mesh and an implicit representation model in different embodiments of the present application;
FIG. 10 is a block diagram of modules in a system for meshing an implicit representation model according to an embodiment of the present application; and
FIG. 11 is a schematic structural diagram of a computer apparatus according to an embodiment of the present application.

### DETAILED DESCRIPTION OF THE INVENTION

The following describes implementations of the present application through specific embodiments. Those skilled in the art may readily comprehend the advantages and achievable technical effects of the present application through the content disclosed in this specification. In the following description, some embodiments may refer to the accompanying drawings. It should be understood that other embodiments which are not shown in the drawings may also be utilized, and modifications may be made to specific steps, modules or units, electrical configurations, and operations without departing from the spirit and scope of the present application. The following detailed description should not be considered as limitative, and the scope of the embodiments of the present application can be defined only by the claims disclosed in the present application. The terms used herein are intended only to describe particular embodiments and are not intended to limit the present application.

Although terms such as "first", "second", and "third" are used herein to describe various elements or parameters in some embodiments, these elements or parameters should not be limited by these terms. These terms are used to distinguish one object or parameter from another, without implying any sequential order, timing, priority, or importance among multiple objects. For example, a first threshold may be referred to as a second threshold, and similarly, a second threshold may be referred to as a first threshold, without departing from the scope of the described embodiments. Both the first threshold and the second threshold are used to describe a threshold, but they are not the same threshold unless the context clearly indicates otherwise.

Furthermore, as used herein, the singular forms "an", "a" and "the" are intended to include the plural forms as well, unless the context indicates otherwise. It should be further understood that the terms "comprise" and "include" indicate the presence of the described feature, step, operation, element, component, item, type, and/or group, but do not exclude the presence, appearance or addition of one or more other features, steps, operations, elements, components, items, types, and/or groups. For example, a process, method, system, product or device that includes a series of steps or units not only includes those steps or units specified expressly, but also includes other steps or units that are not specified expressly or are inherent to the process, method, product or device. In addition, the term "and/or" that may be used below describes an association relationship between associated objects and indicates that three relationships may exist. For example, A and/or B may indicate the following cases: only A exists, both A and B exist, and only B exists. In addition, the character "/" usually indicates an "and/or" relationship between the associated objects unless otherwise specified. In addition, in the description of the embodiments of the present application, "a plurality of" means two or more.

The following provides the explanation of certain nouns or terms used in the embodiments of the present application. These nouns or terms also constitute part of the inventive content. Those skilled in the art may understand that all terms including technical terms and scientific terms used herein have meanings same as those generally understood by a person of ordinary skill in the art unless otherwise defined. It should be further understood that terms such as those defined in general dictionaries should be understood to have meanings same as those in the context of the prior art, and not to explain in ideal or formal meanings unless similarly particularly defined herein.

The three-dimensional computer space described in embodiments of the present application is a computer space with three dimensions (X-axis, Y-axis, and Z-axis) for constructing 3D model. In the following embodiments, the direction corresponding to the X-axis in the bounding space and the mesh is referred to as the length direction, the direction corresponding to the Y-axis in the bounding space and the mesh is referred to as the width direction, and the direction corresponding to the Z-axis in the bounding space and the mesh is referred to as the height direction. In an embodiment, the 3D model is a model constructed in the field of 3D printing technology. Accordingly, the 3D model built in this three-dimensional computer space can be printed via a 3D printer to produce 3D object in real-world physical space. Such 3D objects may include, but are not limited to, aerospace components, automotive parts, industrial equipment components, handicrafts, medical devices, or any other 3D objects.

The implicit representation model (which may also be referred to as an implicit model or an implicit representation-based model) in embodiments of the present application is used to represent the geometric shape of the 3D model through implicit representation. The input of the implicit representation is the three-dimensional coordinate of one or more points in the three-dimensional computer space, and the output of the implicit representation is one or more numbers indicating a relative position relationship between the one or more points and the surface of the 3D model, the number is also referred to as an output value in some embodiments. Specifically, the three-dimensional coordinate of each point in the three-dimensional computer space is input into the implicit representation. A set of points with an output value being 0 defines the outer contour shape of the 3D model. These points may be considered as being on the 3D model. In the case that the point corresponds to an output value of the implicit representation being less than 0, it indicates that the point is inside the 3D model. In the case that the point corresponds to an output value of the implicit representation being greater than 0, it indicates that the point is outside the 3D model. Certainly, in other embodiments, based on a different implicit representation, in the case that the point corresponds to an output value of the implicit representation being less than 0, it may indicate that the point is outside the 3D model. In the case that the point corresponds to an output value of the implicit representation being greater than 0, it may indicate that the point is inside the 3D model.

The implicit representation (or referred to as "implicitness" for short) in embodiments of the present application may be any type or any combination of types. For example, in an example, the implicit representation is configured as an equation. In other words, the geometric shape of the 3D model is represented by an equation. In this example, taking a 3D model of a sphere with a radius being 1 as an example, an implicit representation corresponding to the 3D model is an implicit equation: $f \left(x, y, z\right) = \sqrt{{x}^{2} + {y}^{2} + {z}^{2}} - 1$, where the value of *f*(*x*, *y*, *z*) is an output value of the implicit equation, and (*x*, *y*, *z*) is an input of the implicit equation. In another example, the implicit representation is configured as representing the geometric shape of the 3D model through a function or a combination of functions. The function is, for example, a maximum function max(), a minimum function min(), a length function length(), or a combination thereof. In yet another example, the implicit representation is configured as representing the geometric shape of the 3D model through a conversion relationship, a designated algorithm, or the like. For example, a conversion relationship from a triangular mesh to an implicitness. The above examples are for illustrative only. In another example, the implicit representation may be configured as a combination of any above examples. The type or manner of the implicit representation is not limited in the present application, provided that the implicit representation can represent the geometric shape of the 3D model in the manner defined above.

The meshing model in embodiments of the present application is a model that is formed through the representation, construction, or assembly of basic cell of mesh. The basic cell of mesh may be, for example, a cube cell or a facet cell. The cube cell may be a cube or cuboid cell. The facet cell may be a two-dimensional planar structure with a basic geometric shape (for example, a triangle, or a quadrilateral). For example, in the case that the basic cell of mesh is a cube cell, a corresponding meshing model is a model formed by cube cells, which is also referred to as a voxel mesh model in some examples. For example, in the case that the basic cell of mesh is a triangular facet cell, a corresponding meshing model is a meshing model represented by triangular facets, which is also referred to as a triangular mesh model or a triangular facet model in some examples.

In view of the technical problem of how to improve the computational speed of converting the implicit model to the mesh model in the BACKGROUND.A method and system for meshing an implicit representation model, a computer apparatus, a computer-readable storage medium, and a computer program product are disclosed in the present application. In the meshing method, in a process of meshing a bounding space that can fully bounds an implicit representation model level-by-level, a next-level meshing is performed only on each sub-mesh whose value interval contains a threshold interval until each sub-mesh at the current level satisfying a preset resolution, and a sub-mesh whose value interval of an implicit representation contains the threshold interval can be selected from the sub-meshes that satisfy the preset resolution as a key mesh so as to perform numerical filling and to generate a meshing model, such that the amount of computation for converting the implicit representation model (referred to as implicit model for short) to the mesh model can be reduced and the computational speed of converting the implicit representation model to the mesh model can be improved.

The present application is further described below in detail with reference to the accompanying drawings and specific embodiments. And the technical solutions in embodiments of the present application are clearly and completely described. It is clear that the described embodiments are merely some but not all of embodiments of the present application. On the basis of embodiments of the present application, all other embodiments obtained and technical effects achieved by persons of ordinary skill in the art without creative efforts shall fall within the protection scope of the present application. The phrases "one embodiment", "an embodiment", or similar expressions used throughout this specification mean that specific features, structures, or characteristics described in connection with the embodiment are included in at least one embodiment of the present application. Thus, the appearances of the phrases "in one embodiment", "in an embodiment", and similar expressions throughout this specification may, but do not necessarily, all refer to the same embodiment.

A method for meshing an implicit representation model is provided in some embodiments of the present application. The method for meshing an implicit representation model may be performed by a computer apparatus configured with a system for meshing an implicit representation model. The system for meshing an implicit representation model is a software tool or software module that can process data, and the meshing system performs the method for meshing an implicit representation model by the use of a running environment provided by a hardware device and/or an operating system in the computer apparatus.

In an embodiment, the computer apparatus may be configured as an electronic device, i.e., the method for meshing an implicit representation model is performed by the electronic device. For example, the electronic device includes a desktop computer, a laptop computer, a tablet computer, a smart TV, a smartphone, a tablet, an industrial control computer, or the like. The electronic device may also be an electronic device which is constituted by a host with multiple virtual machines and a human-machine interaction device (e.g., a touchscreen, a keyboard, and a mouse) corresponding to each virtual machine.

In an embodiment, the computer apparatus may be configured as a server, i.e., the server performs the method for meshing an implicit representation model. The server may be arranged on one or more physical servers based on various factors such as functions, load or the like. In some examples, the server may be a cloud architecture-based server. The server is a cloud computing platform provided by a cloud computing provider. The cloud computing platform can provide services such as infrastructure-as-a-service (IaaS), platform-as-a-service (PaaS), and software-as-a-service (SaaS). The cloud computing platform includes a public cloud, a private cloud, a hybrid cloud, or the like. In some examples, the server may be formed by distributed or centralized server clusters. For example, the server cluster is formed by at least one physical server. Each physical server is configured with a plurality of virtual servers, each virtual server runs at least one functional module in the system, and the virtual servers perform communication through a network.

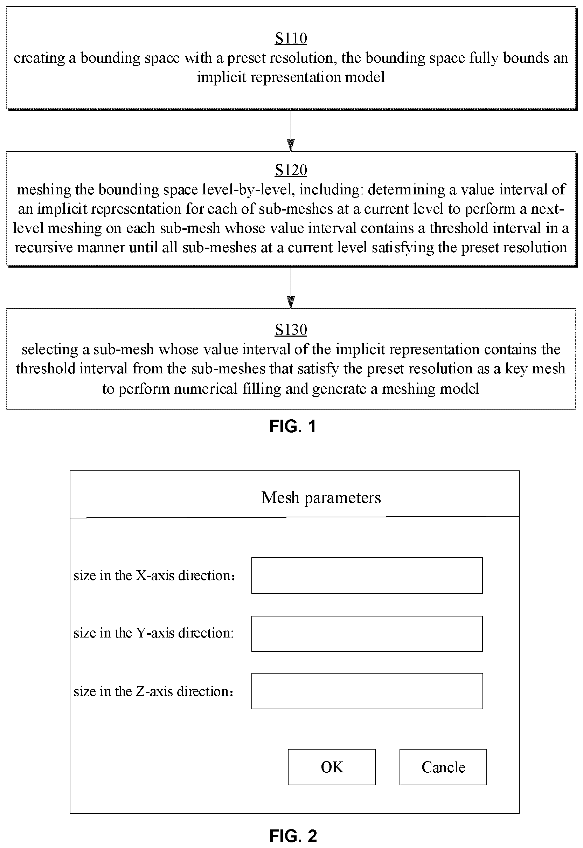

FIG. 1 is a schematic flowchart of a method for meshing an implicit representation model according to an embodiment of the present application. As shown in the figure, the method for meshing an implicit representation model includes Step S110, Step S120, and Step S130. Embodiments are described following by taking the method for meshing an implicit representation model is performed by a computer apparatus as an example.

In Step S110, the computer apparatus creates a bounding space with a preset resolution that can fully bound an implicit representation model. It should be noted that the bounding space with the preset resolution refers to that the bounding space has the preset resolution, and subsequent subdivision operations cannot be performed infinitely on the bounding space, it does not indicate whether the bounding space in Step S110 has been divided based on the preset resolution. In addition, the description of creating the bounding space in embodiments related to this step may be understood as that the bounding space is predefined, and does not necessarily need to be displayed on a display interface of the computer apparatus in a visual manner.

The preset resolution is used for representing the granularity by which the bounding space can be meshed, and may be predefined or prestored, or may be determined based on an input of a user. In an embodiment, the preset resolution is configured as a size of a minimum cell (or may be understood as a unit size) into which the bounding space can be divided.

Further, the preset resolution includes an X-axis-direction resolution (which may also be referred to as a length-direction resolution or an X-axis resolution), a Y-axis-direction resolution (which may also be referred to as a width-direction resolution or a Y-axis resolution), and a Z-axis-direction resolution (which may also be referred to as a height-direction resolution or a Z-axis resolution). For example, in the case that the preset resolution is configured as the size of a minimum cell, the X-axis-direction resolution is a size of the minimum cell in the X-axis direction, and may be understood as the length of the minimum cell. The Y-axis-direction resolution is a size of the minimum cell in the Y-axis direction, and may be understood as the width of the minimum cell. The Z-axis-direction resolution is a size of the minimum cell in the Z-axis direction, and may be understood as the height of the minimum cell. The resolution in each of the X-axis, Y-axis, and Z-axis directions may be identical or may be different. For ease of description, embodiments are described following by taking the resolutions in the X-axis, Y-axis, and Z-axis directions are the same as an example.

In an embodiment, Step S110 includes: creating the bounding space and configuring the preset resolution based on the length, width, and height of a bounding box of the implicit representation model and mesh parameters.

The bounding box of the implicit representation model may be defined as a minimum space bounding the implicit representation model, and may be, for example, an axis aligned bounding box (AABB), or may be, for example, an oriented bounding box (OBB). The length, width, and height of the bounding box are corresponding sizes occupied by the bounding box in the X-axis, the Y-axis, and the Z-axis, respectively.

The mesh parameters may be, for example, predefined or prestored, or may be determined based on an input of a user. In some examples, the mesh parameters include minimum cell sizes of a mesh. The minimum cell sizes may further include a size occupied by the minimum cell in the X-axis (length), a size occupied by the minimum cell in the Y-axis (width), and a size occupied by the minimum cell in the Z-axis (height). In another example, the mesh parameters include a number of minimum cells in each of length, width, and height directions of the bounding space.

In an embodiment, the computer apparatus provides a parameter configuration window for a user to input the mesh parameters. Please referring to FIG. 2, which is a schematic diagram of a parameter configuration window according to an embodiment of the present application. FIG. 2 shows the mesh parameters are the minimum cell sizes of the mesh as an example. The parameter configuration window provides input boxes for the size of the minimum cell of the mesh in the X-axis direction, the size of the minimum cell of the mesh in the Y-axis direction, and the size of the minimum cell of the mesh in the Z-axis direction. User may input data in the corresponding input boxes to input the mesh parameters. It should be understood that FIG. 2 is merely an example. In an example in which the minimum cell of the mesh is a cube (that is, the minimum cell has the same length, width, and height), the parameter configuration window may provide only a side length input box, and user only needs to input data of the side length size. In addition, in an example in which the mesh parameters are configured as other parameters, those skilled in the art may also adaptively adjust displayable content and an interface layout of the parameter configuration window under the guidance of the present application. The present application is not limited thereto.

In an embodiment, for example, in an embodiment in which the mesh parameters are minimum cell sizes of a mesh, the computer apparatus further creates the bounding space based on the length, width, and height of the bounding box of the implicit representation model and the mesh parameters, and makes the minimum cell sizes as the preset resolution directly. Specifically, the computer apparatus may make the length of the minimum cell as an X-axis resolution, and may determine the length of the bounding space based on the length of the minimum cell and the length of the bounding box. The computer apparatus further makes the width of the minimum cell as a Y-axis resolution, and may determine the width of the bounding space based on the width of the minimum cell and the width of the bounding box. The computer apparatus further makes the height of the minimum cell as a Z-axis resolution, and may determine the height of the bounding space based on the height of the minimum cell and the height of the bounding box. In this way, the preset resolution is determined, and the bounding space is created.

How does the computer apparatus determine the length, width, and height of the bounding space is described by taking the determination of the length of the bounding space as an example. Specifically, the computer apparatus may round up a number obtained by dividing the length of the bounding box by the length of the minimum cell, and make the rounded up number as the number of minimum cells in the length direction, and the length of the bounding space can be obtained through the number multiplied by the length of the minimum cell. The width and height of the bounding space may be determined in the same manner, and certainly may alternatively be determined in another manner. For example, the computer apparatus may round up a number obtained by dividing the length of the bounding box by the length of the minimum cell and then add a preset number, the rounded up and added number is made as the number of minimum cells in the length direction. The preset number is, for example, any integer of 1 to 10. The corresponding width and height of the bounding space may be determined in the same manner. In the present application, the manner of determining the length, width, and height of the bounding space is not limited, provided that the length, width, and height of the bounding space are not less than the length, width, and height of the bounding box respectively. In other words, the sizes of the bounding space are slightly greater than the sizes of the bounding box. In this way, it can be ensured that the created bounding space can completely bound the implicit representation model.

In another embodiment, for example, in an embodiment in which the mesh parameters are a number of minimum cells in each of the length, width, and height directions of the bounding space, the computer apparatus may determine the length, width, and height of the bounding space based on the length, width, and height of the bounding box of the implicit representation model directly to create the bounding space, and further configure the preset resolution based on the length, width, and height of the bounding space and the mesh parameters. The manner of determining the length, width, and height of the bounding space may be, for example, adding specific sizes to the length, width, and height of the bounding box to obtain the length, width, and height of the bounding space, or making the length, width, and height of the bounding box as the length, width, and height of the bounding space directly. The manner of configuring the preset resolution may be that the computer apparatus determines the preset resolution based on the number of minimum cells in each of the length direction, width direction, and height direction and the length, width, and height of the bounding space. For example, in the case that the length, width, and height of the bounding space are respectively L1, L2, and L3, and the number of minimum cells is a in the length, b in the width, and c in the height, the preset resolution is configured as including an X-axis resolution L1/a, a Y-axis resolution L2/b, and a Z-axis resolution L3/c.

In Step S120, the computer apparatus meshes the bounding space level-by-level, including: determining a value interval of an implicit representation for each sub-mesh at a current level to perform a next-level meshing on each sub-mesh whose value interval contains a threshold interval in a recursive manner until all sub-meshes at the current level satisfying the preset resolution. The implicit representation is an implicit representation of the implicit representation model. Details are not described again in subsequent embodiments.

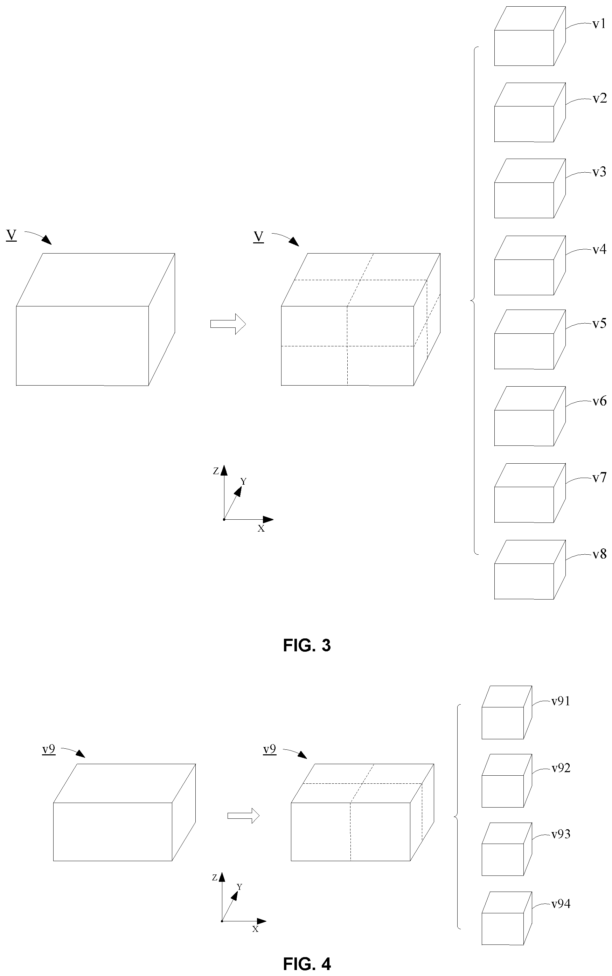

In an embodiment, the step in which the computer apparatus meshes the bounding space level-by-level further includes performing an initial meshing on the bounding space to obtain a plurality of sub-meshes being initially meshed. Specifically, the computer apparatus performs uniform subdivision on the bounding space in each of the length direction, width direction, and height direction of the bounding space to obtain a plurality of sub-meshes being initially meshed. Please referring to FIG. 3, which is a schematic diagram of a bounding space and the bounding space being initially meshed according to an embodiment of the present application. As shown in the figure, the bounding space V is bisected in the length direction, the width direction, and the height direction respectively to obtain 8 sub-meshes. For ease of description, FIG. 3 separately lists the subdivided sub-mesh v1, sub-mesh v2, sub-mesh v3, sub-mesh v4, sub-mesh v5, sub-mesh v6, sub-mesh v7, and sub-mesh v8, and it does not represent the sub-meshes are separated or arranged in the manner shown in the figure. It needs to be noted that although the uniform subdivision manner is bisection in all the length direction, width direction, and height direction in the embodiment shown in FIG. 3, in other embodiments, trisection, quadrisection, or uniform subdivision by another number may alternatively be used, and uniform subdivision by different numbers may alternatively be performed in different directions, or approximate uniform subdivision may alternatively be performed. The approximate uniform subdivision means that after approximate uniform subdivision is performed on the bounding space in corresponding directions, sub-meshes have no great difference among the corresponding directions (for example, a difference in the numbers of minimum cell contained in the sub-meshes being approximate uniform subdivided among the corresponding directions is within 50%). For example, when the number of minimum cells included in the bounding space in each of the length, width, and/or height direction is an odd number, approximate uniform subdivision may be performed on the bounding space in a corresponding direction. For example, when the number of minimum cells included in the bounding space in the length direction is 2047, the computer apparatus may perform approximate uniform subdivision on the bounding space in the length direction of the bounding space. Taking the approximate bisection as an example, after the approximate bisection is performed, there are two sub-meshes in the length direction. The number of minimum cells included in one sub-mesh in the length direction is 1024, and the number of minimum cells included in the other sub-mesh in the length direction is 1023. Embodiments are described following by taking the uniform subdivision manners in different directions are all bisection as an example.

The computer apparatus may take the initial meshing as a first-level meshing. A plurality of sub-meshes obtained by performing the first-level meshing is referred to as a plurality of sub-meshes at the first level. A value interval of an implicit representation for each sub-mesh at the current level is determined to perform the next-level meshing on each sub-mesh whose value interval contains a threshold interval in a recursive manner until all sub-meshes at the current level satisfying the preset resolution. The recursive manner means selecting a sub-mesh under the same selection condition and performing the subdivision at the next level until a termination condition is satisfied. In this embodiment, the selection condition in all the levels is that a value interval of an implicit representation for a sub-mesh at the level contains a threshold interval, and the termination condition is that the sub-mesh at the level satisfies the preset resolution. Each sub-mesh at the current level satisfying the preset resolution is that each sub-mesh at the current level satisfying the corresponding resolutions in the length, width, and height directions respectively.

Specifically, the recursive process in this embodiment may be that when each sub-mesh at the first level does not satisfy the preset resolution, the computer apparatus determines a value interval of an implicit representation for each sub-mesh at the first level, and performs the second-level meshing on each sub-mesh whose value interval contains the threshold interval, thus each sub-mesh at the second level can be obtained. Next, when each sub-mesh at the second level does not satisfy the preset resolution, the computer apparatus continues to determine a value interval of an implicit representation for each sub-mesh at the second level, and continues to perform the third-level meshing on each sub-mesh whose value interval contains the threshold interval, thus each sub-mesh at the third level may be obtained. In this way, the next-level meshing is performed until all sub-meshes at the current level satisfying the preset resolution, and the meshing operation is not performed any longer.

In an embodiment, the step of determining a value interval of an implicit representation for each sub-mesh at the current level to perform the next-level meshing on each sub-mesh whose value interval contains a threshold interval includes: determining the value interval of the implicit representation for each sub-mesh at the current level, comparing the value interval for each sub-mesh with the threshold interval, and performing the next-level meshing on the corresponding sub-mesh when it is determined that the value interval for the corresponding sub-mesh contains the threshold interval.

The value interval of the implicit representation for the sub-mesh refers to an estimation range of a numerical interval in which all output values fall, the output values are obtained by inputting all points in the sub-mesh into the implicit representation of the implicit representation model. The estimation range needs to be wider than (or larger than) a numerical interval formed by a minimum and a maximum in all output values. For example, after all points in a sub-mesh are input into the implicit representation, if a numerical interval formed by a minimum and a maximum in output values is [i, j], lower limit i1 in a value interval [i1, j1] of the implicit representation of the sub-mesh is less than or equal to the lower limit i in the numerical interval, and an upper limit j1 is greater than or equal to the upper limit j in the numerical interval.

In an embodiment, the computer apparatus determines the value interval for the sub-mesh based on diagonal vertices of the sub-mesh. The diagonal vertices of the sub-mesh refer to two end points of a spatial diagonal of the sub-mesh. For example, the diagonal vertices of the sub-mesh are corresponding to a point (a minimum position point) closest to the coordinate origin and a point (a maximum position point) farthest away from the coordinate origin. In an example, for example, the implicit representation is configured as an equation, a function, a combination of functions, or a combination of functions and equations. The computer apparatus may prestore a corresponding interval range calculation algorithm. The computer apparatus may invoke the interval range calculation algorithm based on the determined diagonal vertices of the sub-mesh to output the value interval. In another example, the computer apparatus determines a spatial diagonal length of the sub-mesh based on the diagonal vertices of the sub-mesh and determines the value interval for the sub-mesh based on the spatial diagonal length and an output value of an implicit representation for a center point of the sub-mesh. Specifically, the computer apparatus determines a spatial diagonal length r of the sub-mesh based on the coordinates of any pair of diagonal vertices of the sub-mesh, inputs the coordinates of a center point of the sub-mesh into the implicit representation to obtain an output value p, takes a difference value between the output value p and half of the spatial diagonal length r as a lower limit of the value interval, and takes a sum value of the output value p and half of the spatial diagonal length r as an upper limit of the value interval, so that the value interval for the sub-mesh is [p-0.5r, p+0.5r] can be obtained. In this embodiment, the value interval for the sub-mesh can be quickly obtained in the case that ensuring the value interval definitely contains an actual output value range, thus the computational speed of meshing the implicit representation model can be improved.

In another embodiment, the computer apparatus determines a value interval for a sub-mesh based on key points of the sub-mesh. Specifically, the key points of the sub-mesh are substituted into the implicit representation to obtain a plurality of output values respectively, and takes an interval formed by a minimum value and a maximum value in the plurality of output values as the value interval for the sub-mesh. In an example, the key points include vertices of the sub-mesh, a center point of the sub-mesh, midpoints of edges of the sub-mesh, center points of faces of the sub-mesh, or corner vertices of the sub-mesh, but are not limited thereto. In other examples, those skilled in the art may add other points (for example, points on a spatial diagonal) in the sub-mesh as key points according to a precision requirement under the teaching of the present application.

It needs to be noted that the manner of determining the value interval of the implicit representation for the sub-mesh is not limited in the present application, provided that the estimated value of the output value range can be quickly obtained.

Based on the manner of determining the value interval for the sub-mesh in any above embodiments, the value interval of the implicit representation for each sub-mesh at the current level can be determined, and the threshold interval with the value interval for each sub-mesh can be compared to determine whether the value interval for each sub-mesh contains the threshold interval. Embodiments are described following by taking the implicit representation is configured as follows as an example: in the case that the point corresponds to an output value of the implicit representation being less than 0, it indicates that the point is inside the 3D model, and in the case that the point corresponds to an output value of the implicit representation being greater than 0, it indicates that the point is outside the 3D model.

In an embodiment, the threshold interval is configured as a boundary value of the implicit representation. The boundary value of the implicit representation refers to an output value of an implicit representation for a point on an outer contour of the implicit representation model. For example, an output value being 0 represents a point on the outer contour, and the boundary value is 0. That is, in this embodiment, the threshold interval is configured as a single point interval [0, 0]. In this embodiment, comparing the threshold interval with the value interval for each sub-mesh may refer to, for example, comparing a lower limit value and/or an upper limit value of the value interval for the sub-mesh with the boundary value. Further, in an example, when the lower limit value of the value interval for the sub-mesh is greater than the boundary value, it is determined that the value interval is greater than the threshold interval. In this case, the sub-mesh is completely located outside the implicit representation model. For example, in the case that a value interval for a sub-mesh is [1, 2], and the boundary value is 0, it is determined that the value interval for the sub-mesh is greater than the threshold interval. In another example, when the upper limit value of the value interval for the sub-mesh is less than the boundary value, it is determined that the value interval is less than the threshold interval. In this case, the sub-mesh is completely located inside the implicit representation model. For example, in the case that a value interval for a sub-mesh is [-2, -1], and the boundary value is 0, it is determined that the value interval for the sub-mesh is less than the threshold interval. In yet another example, when the lower limit value of the value interval for the sub-mesh is less than or equal to the boundary value and the upper limit value of the value interval is greater than or equal to the boundary value, it is determined that the value interval for the corresponding sub-mesh contains the threshold interval. In this case, the sub-mesh may be completely located inside the implicit representation model, or may be completely located outside the implicit representation model, or may be partially located inside the implicit representation model and partially located outside the implicit representation model. For example, in the case that a value interval for a sub-mesh is [-1, 1], and the boundary value is 0, it is determined that the value interval for the sub-mesh contains the threshold interval.

In another embodiment, the threshold interval is configured as an interval with a first threshold as an upper limit and a second threshold as a lower limit and containing a boundary value of the implicit representation. In other words, the boundary value of the implicit representation is contained in the threshold interval with the first threshold as the upper limit and the second threshold as the lower limit. In an example, the first threshold is a positive number close to 0, and the second threshold is a negative number close to 0. For example, the first threshold may be any positive number within [0, 0.5], and the second threshold may be any negative number within [-0.5, 0]. In this embodiment, comparing the threshold interval with the value interval for each sub-mesh may refer to, for example, comparing the lower limit value of the value interval for the sub-mesh with an upper limit value of the threshold interval and/or comparing the upper limit value of the value interval for the sub-mesh with a lower limit value of the threshold interval. Further, in an example, when the lower limit value of the value interval for the sub-mesh is greater than the first threshold, it is determined that the value interval is greater than the threshold interval. In this case, the sub-mesh is completely located outside the implicit representation model. For example, in the case that the threshold interval is configured as [-0.1, 0.1], and the value interval for the sub-mesh is [0.2, 0.4], it is determined that the value interval is greater than the threshold interval. In another example, when the upper limit value of the value interval for the sub-mesh is less than the second threshold, it is determined that the value interval is less than the threshold interval. In this case, the sub-mesh is completely located inside the implicit representation model. For example, in the case that the threshold interval is configured as [-0.1, 0.1], and the value interval for the sub-mesh is [-1, -0.3], it is determined that the value interval is less than the threshold interval. In yet another example, when the lower limit value of the value interval for the sub-mesh is less than or equal to the first threshold and the upper limit value of the value interval is greater than or equal to the second threshold, it is determined that the value interval for the corresponding sub-mesh contains the threshold interval. In this case, the sub-mesh may be completely located inside the implicit representation model, or may be completely located outside the model, or may be partially located inside the model and partially located outside the model. For example, in the case that a value interval for a sub-mesh is [-1, 0.05], and the threshold interval is [-0.1, 0.1], it is determined that the value interval for the sub-mesh contains the threshold interval.

In other embodiments, when the implicit representation is configured as that in the case that the point corresponds to an output value of the implicit representation being less than 0, it indicates that the point is outside the 3D model, and in the case that the point corresponds to an output value of the implicit representation being greater than 0, it indicates that the point is inside the 3D model, if the value interval is greater than the threshold interval, it is determined that the sub-mesh is completely located inside implicit representation model, and if the value interval is less than the threshold interval, it is determined that the sub-mesh is completely located outside the implicit representation model.

The computer apparatus performs the next-level meshing on a corresponding sub-mesh when the value interval contains the threshold interval. In an embodiment, the next-level meshing is configured to traverse length, width, and height directions of each sub-mesh at the current level to perform meshing on each sub-mesh at the current level in a uniform subdivision manner in a direction in which uniform subdivision is feasible. Specifically, the step of performing the next-level meshing on each sub-mesh at the current level includes: traversing the length, width, and height directions of each sub-mesh at the current level, taking the direction that does not satisfy the corresponding resolution as a direction in which uniform subdivision is feasible, and performing uniform subdivision on the sub-mesh at the current level in the direction in which uniform subdivision is feasible, thus the next-level meshing of the sub-meshes is implemented. The manner of performing uniform subdivision on the sub-mesh at the current level in the direction in which uniform subdivision is feasible is the same as or similar to the above manner of performing uniform subdivision in the length direction, width direction, and height direction during initial meshing. Details are not described again herein.

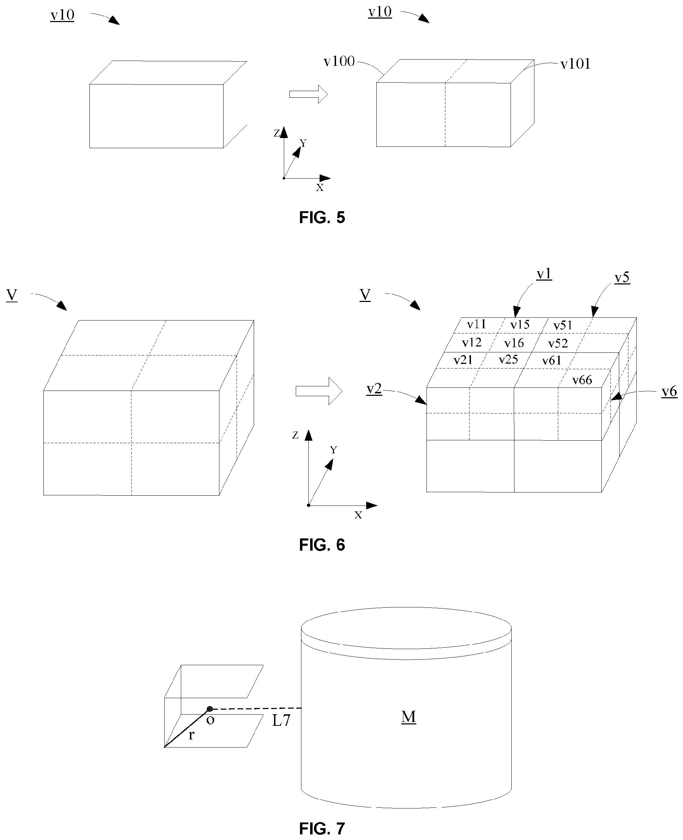

Embodiments are described in detail by taking the manner of performing uniform subdivision in the direction in which uniform subdivision is feasible is bisection as an example. If the length, width, and height directions are all directions in which uniform subdivision is feasible, after the next-level meshing is performed on a sub-mesh, the sub-mesh may be subdivided into 8 sub-meshes. In this embodiment, the manner of subdividing a sub-mesh is the same as the subdivision manner of initial meshing in FIG. 3. If only two of the length, width, and height directions are directions in which uniform subdivision is feasible, after the next-level meshing is performed on a sub-mesh, the sub-mesh may be subdivided into 4 sub-meshes. Please referring to FIG. 4, which is a schematic diagram of a sub-mesh being uniformly subdivided with length and width directions of the sub-mesh as directions in which the uniform subdivision is feasible according to an embodiment of the present application. As shown in the figure, a sub-mesh v9 is uniform subdivided in length and width directions and 4 sub-meshes (a sub-mesh v91, a sub-mesh v92, a sub-mesh v93, and a sub-mesh v94) are obtained. If only one of the length, width, and height directions is a direction in which uniform subdivision is feasible, after next-level meshing is performed on a sub-mesh, the sub-mesh may be subdivided into 2 sub-meshes. FIG. 5 is a schematic diagram of a sub-mesh being uniformly subdivided with a length direction of the sub-mesh as a direction in which the uniform subdivision is feasible according to an embodiment of the present application. As shown in the figure, a sub-mesh v10 is uniform subdivided in a length direction, and 2 sub-meshes (a sub-mesh v100 and a sub-mesh v101) are obtained.

In a specific embodiment, please referring to FIG. 3 and FIG. 6, FIG. 6 is a schematic diagram of sub-meshes whose value interval of an implicit representation contain a threshold interval in the embodiment shown in FIG. 3 being next-level meshed. For example, according to any above implementations, in the case that it is determined sub-meshes each of whose value interval of an implicit representation contains the threshold interval in the plurality of sub-meshes (the sub-mesh v1, the sub-mesh v2, the sub-mesh v3, the sub-mesh v4, the sub-mesh v5, the sub-mesh v6, the sub-mesh v7, and the sub-mesh v8) being first-level meshed in FIG. 3 include the sub-mesh v1, the sub-mesh v2, the sub-mesh v5, and the sub-mesh v6, only the sub-mesh v1, the sub-mesh v2, the sub-mesh v5, and the sub-mesh v6 need to be next-level subdivided, and the remaining sub-meshes (i.e., the sub-mesh v3, the sub-mesh v4, the sub-mesh v7, and the sub-mesh v8) no longer need to be subdivided subsequently. For example, taking the next-level meshing is performed on the sub-mesh v6 as an example, the length, width, and height directions of the sub-mesh v6 are traversed. If none of the length, width, and height directions of the sub-mesh v6 is the direction satisfying the corresponding resolution, the length, width, and height directions of the sub-mesh v6 are used as directions in which uniform subdivision is feasible. After uniform subdivision is performed in the three directions, the second-level meshing on the sub-mesh v6 is implemented. That is, the sub-mesh v6 in FIG. 6 is subdivided into 8 sub-meshes. The next-level meshing on the sub-mesh v1, the sub-mesh v2, and the sub-mesh v5 is similar to that on the sub-mesh v6. The length, width, and height directions of the sub-mesh v1, the sub-mesh v2, and the sub-mesh v5 are traversed respectively. For example, if none of the length, width, and height directions of the sub-mesh v1, the sub-mesh v2, and the sub-mesh v5 is the direction satisfying the corresponding resolution, the length, width, and height directions of the sub-mesh v1, the sub-mesh v2, and the sub-mesh v5 are used as directions in which uniform subdivision is feasible. After uniform subdivision is performed in the three directions, the second-level meshing on the sub-mesh v1, the sub-mesh v2, and the sub-mesh v5 is implemented. Each of the sub-mesh v1, the sub-mesh v2, and the sub-mesh v5 in FIG. 6 may also be subdivided into is 8 sub-meshes. All sub-meshes obtained through subdivision are not displayed due to perspective limitations.

In an embodiment, the step of determining a value interval of an implicit representation for each sub-mesh at the current level to perform next-level meshing on each sub-mesh whose value interval contains a threshold interval further includes Step S1200.

In Step S1200, the computer apparatus fills the corresponding sub-mesh with one or more numbers representing being outside the implicit representation model when it is determined that the value interval is greater than the threshold interval, and fills the corresponding sub-mesh with one or more numbers representing being inside the implicit representation model when it is determined that the value interval is less than the threshold interval. In this embodiment, the implicit representation is configured as that in the case that the point corresponds to an output value of the implicit representation being less than 0, it indicates that the point is inside the 3D model, and in the case that the point corresponds to an output value of the implicit representation being greater than 0, it indicates that the point is outside the 3D model.

In an embodiment, as can be known from the comparison between the value interval and the threshold interval in the above embodiment, when a value interval for a sub-mesh is greater than the threshold interval, it indicates that the sub-mesh is completely outside the implicit representation model, and the sub-mesh may be filled with one or more numbers representing being outside the implicit representation model. When a value interval for a sub-mesh is less than the threshold interval, it indicates that the sub-mesh is completely inside the implicit representation model, and the sub-mesh may be filled with one or more numbers representing being inside the implicit representation model. The number representing being outside the implicit representation model and the number representing being inside the implicit representation model may be configured as any different values. For example, the number representing being outside the implicit representation model is configured as 0, and the number representing being inside the implicit representation model is configured as 2.

Continue to refer to FIG. 6 and in combination with FIG. 3, comparison results of all the sub-mesh v3, the sub-mesh v4, the sub-mesh v7, and the sub-mesh v8 are that the value interval is greater than the threshold interval, the number representing being outside the implicit representation model, for example, 0, is filled in all the sub-mesh v3, the sub-mesh v4, the sub-mesh v7, and the sub-mesh v8. It needs to be noted that when the threshold interval is configured as a boundary value of the implicit representation or the threshold interval is configured as an interval with a first threshold as an upper limit and a second threshold as a lower limit and containing a boundary value of the implicit representation, the manners of determining that the value interval is greater than the threshold interval and the manner of determining that the value interval is less than the threshold interval are the same as or similar to those in the above embodiments. Details are not described again herein.

In other embodiments, when the implicit representation is configured as that in the case that the point corresponds to an output value of the implicit representation being less than 0, it indicates that the point is outside the 3D model, and in the case that the point corresponds to an output value of the implicit representation being greater than 0, it indicates that the point is inside the 3D model, the corresponding sub-mesh may be filled with the one or more number representing being inside the implicit representation model when the value interval is greater than the threshold interval, and the corresponding sub-mesh may be filled with the one or more number representing being outside the implicit representation model when the value interval is less than the threshold interval.

In an embodiment, when the sub-mesh is filled with the number representing being outside the implicit representation model or the number representing being inside the implicit representation model, the number representing being outside the implicit representation model or the number representing being inside the implicit representation model may be filled into a position at which a center point is located in the sub-mesh.

In an embodiment, to reduce the data amount of the subsequently generated meshing model, each sub-mesh whose value interval is greater than the threshold interval and each sub-mesh whose value interval is less than the threshold interval may alternatively be not filled with a number.

It needs to be noted that when the threshold interval is compared with the value interval for each sub-mesh, the value intervals for each sub-mesh may be compared with the threshold interval after the value intervals for all sub-meshes are completely calculated, or after the value interval for each sub-mesh is calculated. A similar case further includes the step of performing next-level meshing on a corresponding sub-mesh. When the step is performed, the next-level meshing may be performed on all sub-meshes that satisfy the condition of having a value interval containing the threshold interval, or the next-level meshing may be performed on one sub-mesh when it is determined that a value interval of the one sub-mesh contains the threshold interval. Similar case further in Step S1200.

Further, according to Step S120, the next-level meshing is stopped when all sub-meshes at the current level satisfy the preset resolution, or otherwise the next-level meshing continues to be performed on the selected sub-mesh according to the embodiments related to Step S120 provided above. Continue to referring to FIG. 6, if all sub-meshes (i.e., 32 sub-meshes) obtained by subdividing the sub-mesh v1, the sub-mesh v2, the sub-mesh v5, and the sub-mesh v6 satisfy the length-direction resolution in the length direction, satisfy the width-direction resolution in the width direction, and satisfy the height-direction resolution in the height direction, it indicates that the 32 sub-meshes being second-level meshed all satisfy the preset resolution, then the next-level meshing on the sub-mesh v1, the sub-mesh v2, the sub-mesh v5, and the sub-mesh v6 are stopped; otherwise, for the 32 sub-meshes, continues to determining the value interval respectively, performing the next-level meshing on each sub-mesh which satisfies that a value interval contains a threshold interval. And filling one or more numbers representing being outside the implicit representation model in each sub-mesh whose value interval is greater than the threshold interval, and filling one or more numbers representing being inside the implicit representation model in each sub-mesh whose value interval is less than the threshold interval.

After the termination condition is satisfied in Step S120, that is, the subdivided sub-meshes satisfy the preset resolution, meshing is stopped, and Step S130 is performed. In Step S130, the computer apparatus selects a sub-mesh whose value interval of the implicit representation contains the threshold interval from the sub-meshes that satisfy the preset resolution as a key mesh to perform numerical filling and generate a meshing model. It should be understood that in Step S130, the value interval of the implicit representation for each sub-mesh that satisfies the preset resolution is determined in the manner disclosed in the embodiment provided in Step S120, and the key mesh can be selected based on the determination. Certainly, the process of determining the value interval of the implicit representation for each sub-mesh that satisfies the preset resolution may alternatively be performed in Step S120. That is, when the sub-meshes satisfy the preset resolution, the value interval of the implicit representation for each sub-mesh may further be determined in Step S120 and be used in Step S130.

In view of that the value interval is an estimation range of an output value of an implicit representation for a sub-mesh, when the value interval contains a threshold interval, it cannot necessarily be accurately determined that the sub-mesh is definitely on the model (for example, a case in which the sub-mesh is very close to an outer contour of the model), or even if the sub-mesh is actually on the model, the sub-mesh may span the outer contour of the model. Therefore, in Step S130, the computer apparatus needs to take a sub-mesh whose value interval of the implicit representation contains the threshold interval as a key mesh to perform numerical filling, and then generate a meshing model corresponding to the implicit representation model. Continue to refer to FIG. 6, the 32 sub-meshes being second-level meshed in FIG. 6 all satisfy the preset resolution, and value intervals of only the sub-mesh v11, the sub-mesh v12, the sub-mesh v15, the sub-mesh v16, the sub-mesh v21, the sub-mesh v25, the sub-mesh v51, the sub-mesh v52, the sub-mesh v61, and the sub-mesh v66 in the 32 sub-meshes contain the threshold interval, the computer apparatus takes the sub-mesh v11, the sub-mesh v12, the sub-mesh v15, the sub-mesh v16, the sub-mesh v21, the sub-mesh v25, the sub-mesh v51, the sub-mesh v52, the sub-mesh v61, and the sub-mesh v66 as the key meshes.

In an embodiment, the step of performing numerical filling includes: selecting at least one representative point from the key mesh to acquire an output value of an implicit representation for the at least one representative point, and filling the output value into a corresponding position in the key mesh. The representative point may be a center point of the key mesh or may be a corner vertex in the key mesh or a point at another position in the key mesh. In an example, the step of performing numerical filling includes: selecting one representative point from the key mesh and acquiring an output value of an implicit representation for the one representative point, and filling the output value into a position at which the one representative point is located in the key mesh. For example, taking the representative point is the center point of the key mesh as an example, the coordinate of the center point of the key mesh is input into the implicit representation, so that an output value of the implicit representation of the center point may be obtained, and the output value is filled into the corresponding key mesh. Continue to refer to FIG. 6, after the coordinates of the center points of the sub-mesh v11, the sub-mesh v12, the sub-mesh v15, the sub-mesh v16, the sub-mesh v21, the sub-mesh v25, the sub-mesh v51, the sub-mesh v52, the sub-mesh v61, and the sub-mesh v66 are respectively input into the implicit representation, output values of the implicit representation for corresponding center points of the sub-mesh v11, the sub-mesh v12, the sub-mesh v15, the sub-mesh v16, the sub-mesh v21, the sub-mesh v25, the sub-mesh v51, the sub-mesh v52, the sub-mesh v61, and the sub-mesh v66 may be obtained, and the output values are respectively correspondingly filled into the sub-mesh v11, the sub-mesh v12, the sub-mesh v15, the sub-mesh v16, the sub-mesh v21, the sub-mesh v25, the sub-mesh v51, the sub-mesh v52, the sub-mesh v61, and the sub-mesh v66. In this example, the computer apparatus may fill the output value of the implicit representation for the center point of the key mesh into the position at which the center point of the key mesh is located. Although in the above examples, embodiments are described in detail by taking that selecting one representative point from the key mesh and acquiring the output value of the implicit representation for the one representative point, and filling the output value into the key mesh as an example, the present application is not limited thereto. In other examples, a plurality of (two or more) representative points may alternatively be selected from the key mesh and output values of the implicit representation for the plurality of representative points may be acquired, and the output values of the implicit representation for the plurality of representative points are filled into the positions at which the plurality of representative points are located in the key mesh. For example, 8 corner vertices in the key mesh are used as representative points, and output values of the implicit representation for the 8 corner vertices are respectively correspondingly filled into the positions at which the 8 corner vertices are located in the key mesh.

It needs to be noted that the number filled in the key mesh may be any number with the same plus or minus sign as the output value of the implicit representation. For example, the output value of the implicit representation for the center point of the key mesh is -8, and any negative number may be directly filled in the key mesh. For example, the output value of the implicit representation for the center point of the key mesh is 8, and any positive number may be directly filled in the key mesh.

In an embodiment, the computer apparatus may further convert the filled key mesh to a triangular mesh by using a preset algorithm to generate a meshing model represented by the triangular mesh. The preset algorithm may be a Marching Cubes algorithm, a Dual Contouring algorithm, a Surface Nets algorithm, or the like. It needs to be noted that the preset algorithm is not limited in the present application. Those skilled in the art may select, based on the above examples of the preset algorithm, other algorithm that can implement the triangular mesh conversion.

In another embodiment, the computer apparatus further determines a position of a key mesh relative to the outer contour of the implicit representation model, that is, further fills one or more numbers representing being on the implicit representation model, one or more numbers representing being outside the implicit representation model, or one or more numbers representing being inside the implicit representation model in the key mesh. In this embodiment, the step of performing numerical filling includes Step S1300 and Step S1301.

In Step S1300, the computer apparatus determines a distance between a center point of the key mesh and the implicit representation model and compares the distance with a reference distance, where the reference distance is configured as half a distance between diagonal vertices of the key mesh, that is, the reference distance is configured as half of a spatial diagonal of the key mesh.

Because the output value of the implicit representation for the center point of the key mesh can only represent whether the center point is inside or outside the implicit representation model and does not necessarily represent the actual shortest distance between the center point and the model, for example, when the implicit representation model includes an implicit representation of a triply periodic minimal surface, the output value of the implicit representation for the center point of the key mesh does not necessarily represent the shortest distance between the center point and the model. For this, the computer apparatus needs to determine the distance between the center point of the key mesh and the implicit representation model and compare the distance with a reference distance to determine whether the key mesh is on the implicit representation model.

In an embodiment, the computer apparatus calculates the distance between the center point of the key mesh and the implicit representation model by using a preset distance calculation algorithm. The distance is the shortest distance between the center point of the key mesh and the implicit representation model. The preset distance calculation algorithm is, for example, a gradient descent method, Newton's iteration method, or the like. It needs to be noted that the preset distance calculation algorithm is not limited in the present application. Those skilled in the art may select, based on the above examples of the preset distance calculation algorithm, other algorithm that can calculate of the shortest distance.

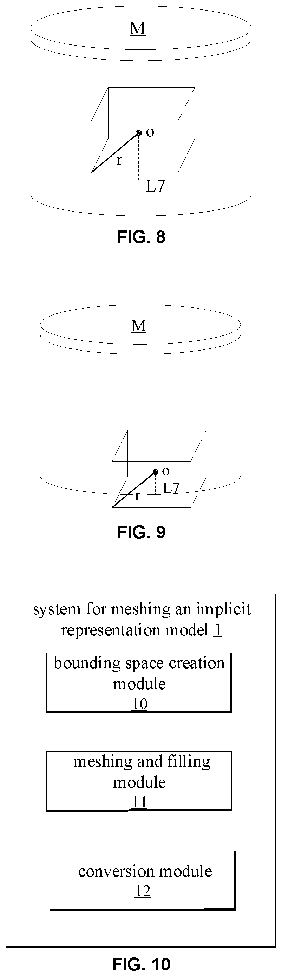

Further, the calculated distance is compared with the reference distance. When the distance is less than or equal to the reference distances, it indicates that the key mesh is definitely on the implicit representation model. In other words, the key mesh is definitely in contact with the outer contour of the implicit representation model. When the distance is greater than the reference distance, it indicates that the key mesh is inside or outside the implicit representation model. For example, please referring to FIG. 7 to FIG. 9, which are schematic diagrams of a relative position relationship between a key mesh and an implicit representation model in different embodiments of the present application. In the embodiments shown in FIG. 7 and FIG. 8, the shortest distances L7 between a center point o of a key mesh and an implicit representation model M calculated by the computer apparatus are both greater than a reference distance r, the key mesh may be outside the implicit representation model M as shown in FIG. 7, or may be inside the implicit representation model as shown in FIG. 8. As shown in FIG. 9, the shortest distance L7 between the center point o of the key mesh and the implicit representation model M is less than the reference distance r, the key mesh is in contact with the outer contour of the implicit representation model.

In Step S1301, the computer apparatus fills the key mesh with one or more numbers representing being on the implicit representation model when the distance is less than or equal to the reference distance or determines the filled one or more numbers of the key mesh when the distance is greater than the reference distance.

The number representing being on the implicit representation model is a real number that is different from the number representing being outside the implicit representation model and the number representing being inside the implicit representation model. For example, the number representing being outside the implicit representation model is configured as 0, the number representing being inside the implicit representation model is configured as 2, and the number representing being on the implicit representation model is configured as 1.

For example, the distances between the center points of the sub-mesh v11, the sub-mesh v12, the sub-mesh v15, the sub-mesh v21, the sub-mesh v25, the sub-mesh v51, the sub-mesh v52, and the sub-mesh v61 in the key meshes (i.e., the sub-mesh v11, the sub-mesh v12, the sub-mesh v15, the sub-mesh v16, the sub-mesh v21, the sub-mesh v25, the sub-mesh v51, the sub-mesh v52, the sub-mesh v61, and the sub-mesh v66) in FIG. 6 and the implicit representation model are all less than or equal to the reference distance, the number representing being on the implicit representation model is filled in each of the sub-mesh v11, the sub-mesh v12, the sub-mesh v15, the sub-mesh v21, the sub-mesh v25, the sub-mesh v51, the sub-mesh v52, and the sub-mesh v61.

In an embodiment, when the distance is greater than the reference distance, it needs to be determined whether the key mesh is outside the implicit representation model or inside the implicit representation model so as to determine the filled one or more numbers of the key mesh. In a specific embodiment, the step of determining a filled one or more numbers of the key mesh when the distance is greater than the reference distance includes Step S13010 and Step S13011. In this embodiment, the implicit representation is configured as that in the case that the point corresponds to an output value of the implicit model being less than 0, it indicates that the point is inside the 3D model, and in the case that the point corresponds to output value of the implicit model being greater than 0, it indicates that the point is outside the 3D model.

In Step S13010, the computer apparatus determines an output value of an implicit representation for the center point of the key mesh and compare the output value with a boundary value of the implicit representation. Specifically, when the distance is greater than the reference distance, the computer apparatus determines the output value of the implicit representation for the center point of the key mesh, and compares the output value with the boundary value (i.e., 0) of the implicit representation, when the output value is greater than the boundary value (i.e., 0), determines that the key mesh is outside the implicit representation model, and when the output value is less than the boundary value (i.e., 0), determines that the key mesh is inside the implicit representation model. For example, the distances between the center points of the sub-mesh v16 and the sub-mesh v66 in the key meshes in FIG. 6 and the implicit representation model are both greater than the reference distance, the output value of the implicit representation for the center point of the sub-mesh v66 is greater than the boundary value, the output value of the implicit representation for the center point of the sub-mesh v16 is less than the boundary value, it indicates that the sub-mesh v66 is located outside the implicit representation model, and the sub-mesh v16 is located inside the implicit representation model.

In Step S13011, the computer apparatus fills the key mesh with one or more numbers representing being outside the implicit representation model when the output value is greater than the boundary value; or, fills the key mesh with one or more numbers representing being inside the implicit representation model when the value is less than the boundary value.

Continue to refer to FIG. 6, in the above embodiment, it is determined that the output value of the implicit representation for the center point of the sub-mesh v66 in the key meshes in FIG. 6 is greater than the boundary value, and the output value of the implicit representation for the center point of the sub-mesh v16 in the key meshes in FIG. 6 is less than the boundary value, the sub-mesh v66 is filled with the number representing being outside the implicit representation model, and the sub-mesh v16 is filled with the number representing being inside the implicit representation model.

In other embodiments, when the implicit model is configured as that in the case that the point corresponds to an output value of the implicit model being less than 0, it indicates that the point is outside the 3D model, and in the case that the point corresponds to an output value of the implicit model being greater than 0, it indicates that the point is inside the 3D model, the computer apparatus fills the key mesh with one or more numbers representing being inside the implicit representation model when the output value is greater than the boundary value; or, fills the key mesh with one or more numbers representing being outside the implicit representation model when the value is less than the boundary value.

In an embodiment, when the key mesh is filled with the number representing being on the implicit representation model, the number representing being outside the implicit representation model, or the number representing being inside the implicit representation model, the number representing being on the implicit representation model, the number representing being outside the implicit representation model, or the number representing being inside the implicit representation model is filled into a position at which a center point is located in the key mesh.

In an embodiment, after filling the number representing being on the implicit representation model, the number representing being outside the implicit representation model, or the number representing being inside the implicit representation model in the key mesh, the computer apparatus may generate the voxel mesh model based on the meshed and filled bounding space. For example, the voxel mesh model includes a plurality of sub-meshes obtained through being meshed level-by-level, and the sub-meshes used as the key meshes are filled with numbers.

A system for meshing an implicit representation model is provided in some embodiments of the present application, the system may be, for example, deployed on a computer apparatus. The system is served as a software tool or software module that can process data, and performs data processing by the use of a running environment provided by a hardware device and/or an operating system in the computer apparatus.

Please referring to FIG. 10, which is a block diagram of modules in a system for meshing an implicit representation model according to an embodiment of the present application. As shown in the figure, the system 1 for meshing an implicit representation model includes a bounding space creation module 10, a meshing and filling module 11, and a conversion module 12. The bounding space creation module 10 is configured to create a bounding space with a preset resolution that can fully bounds an implicit representation model. The meshing and filling module 11 is configured to mesh the bounding space level-by-level, the step of meshing the bounding space level-by-level includes: determining a value interval of an implicit representation for each sub-mesh at a current level to perform a next-level meshing on each sub-mesh whose value interval contains a threshold interval in a recursive manner until all sub-meshes at the current level satisfying the preset resolution; and further configured to select a sub-mesh whose value interval of the implicit representation contains the threshold interval from the sub-meshes that satisfy the preset resolution as a key mesh to perform numerical filling. The conversion module 12 is configured to generate a meshing model based on the meshed and filled bounding space.

In an embodiment, the meshing model is a mesh model represented by triangular mesh, and the conversion module 12 converts the filled key mesh to a triangular mesh by using a preset algorithm to generate a meshing model represented by the triangular mesh. The preset algorithm may be a Marching Cubes algorithm, a Dual Contouring algorithm, a Surface Nets algorithm, or the like. It needs to be noted that the preset algorithm is not limited in the present application. Those skilled in the art may select, based on the above examples of the preset algorithm, other algorithm that can implement the triangular mesh conversion.

In another embodiment, the generated meshing model is a voxel mesh model, and after filling the number in the key mesh, the conversion module 12 may generate the voxel mesh model based on the meshed and filled bounding space. For example, the voxel mesh model includes a plurality of sub-meshes obtained through being meshed level-by-level, and the sub-meshes used as the key meshes are filled with numbers.

In an embodiment, the bounding space creation module 10, the meshing and filling module 11, and the conversion module 12 included in the system 1 for meshing an implicit representation model coordinate and perform the method for meshing an implicit representation model disclosed in any above embodiments of the present application based on the functions described above. Referring to any embodiments for FIG. 1 to FIG. 9 and related descriptions thereof, details are not described again herein.

The bounding space creation module 10, the meshing and filling module 11, and the conversion module 12 may be implemented in software executed by different types of processors. For example, a module of executable code may include one or more physical or logical blocks of computer instructions organized as objects, programs, or functions. However, the executable files of a module need not be physically co-located, but may include disparate commands stored in different locations. When being logically linked together, these commands comprise the module and achieve the specified purpose of the module.

Certainly, the module of executable code may be one or multiple instructions, and can even be distributed across several different code segments, different programs, and multiple storage devices. Similarly, operational data may be identified and presented in the module, and the operational data may be embodied in any suitable form, and the operational data may be organized in any appropriate type of data structure. The operational data may be collected as a single dataset or distributed across different locations (including different storage devices), and may exist at least partially solely as electronic signals in a system or network. When a module or part of the module is implemented in software, the software is stored on one or more computer-readable media.

A computer apparatus is provided in the present application, the computer apparatus includes a bus, a processor, a memory, and a communication interface. The processor, the memory, and the communication interface communicate with each other via the bus. The computer apparatus may be a server, a laptop computer, a desktop computer, an edge device, etc., which is not specifically limited in the embodiments of the present application. Moreover, the number of processor and memory in the computer apparatus is also not limited in the embodiments of the present application.

The bus may be a peripheral component interconnect (PCI) bus, an extended industry standard architecture (EISA) bus, or the like. The bus may include an address bus, a data bus, a control bus, and the like. For ease of representation, only one line is used to represent the bus in the figure, but this does not mean that there is only one bus or only one type of bus. The bus may include pathways for transmitting information among various components (e.g., the memory, the processor, and the communication interface) of the computer apparatus.

In an embodiment, the computer apparatus is configured to implement the method for meshing an implicit representation model described in any of the above embodiments. In an embodiment, the computer apparatus is an apparatus capable of performing digital computation, logical processing, and information processing on data, including but not limited to, a personal computer, an industrial control computer, a tablet, a smartphone, a server, a server cluster, an intelligent terminal, and a cloud architecture-based server system.

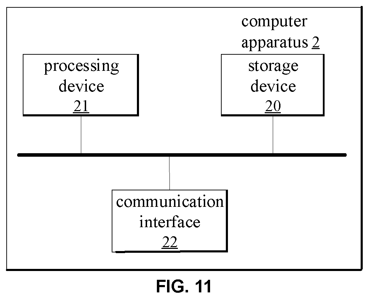

FIG. 11 is a schematic structural diagram of a computer apparatus according to an embodiment of the present application. The computer apparatus 2 includes a storage device 20 and a processing device 21 connected with the storage device 20. Furthermore, the computer apparatus further includes a communication interface 22.

In some embodiments, the storage device 20 is configured to store at least one program executable by the processing device 21 to coordinate the storage device 20 in implementing the method for meshing an implicit representation model described in any above embodiments. The storage device 20 includes but is not limited to, a read-only Memory (ROM), a random access memory (RAM), and a non-volatile RAM (NVRAM). For example, the storage device 20 includes a flash memory device or another non-volatile solid-state storage device. In some embodiments, the storage device 20 may further include a memory remote from one or more processing devices 21, such as network-attached memory accessible via RF circuitry or an external port and a communication network. The communication network may be the Internet, one or more intranets, a local area network (LAN), a wide area network (WAN), a storage area network (SAN), or any suitable combination thereof. A memory controller may control access to the memory by other components such as CPUs and peripheral interfaces of the apparatus.

In some embodiments, the processing device 21 includes one or more processors. The processing device 21 is operatively coupled with the storage device 20 to perform data read/write operations. The processing device 21 includes one or more general-purpose microprocessors, one or more application-specific integrated circuits (ASICs), one or more digital signal processors (DSPs), one or more field-programmable gate arrays (FPGAs), or any combination thereof.

In some embodiments, the communication interface 22 includes at least one interface unit. Each interface unit is configured to output visual interfaces, receive human-machine interaction events triggered by technician operations, and the like. For example, the communication interface 22 includes but is not limited to, serial interfaces such as an HDMI interface or a USB interface, parallel interfaces, or the like. In an embodiment, the communication interface 22 further includes a network communication unit, which is a device for data transmission via wired or wireless networks. Examples of the device include but are not limited to, an integrated circuit containing a network interface card, a local area network module (e.g., a Wi-Fi or Bluetooth module), a wide area network module (e.g., a mobile network), or the like.

A computer-readable storage medium is provided in the present application, the computer-readable storage medium stores at least one program, where the at least one program, when invoked and executed by a processor of a computer, implements the method for meshing an implicit representation model in any above embodiments.

A computer program product is provided in the present application, when the computer program product is executed on a computer, the computer is enabled to perform the above related steps, to implement the method for meshing an implicit representation model in any above embodiments.

When the method is implemented in the form of a software functional unit and sold or used as an independent product, the unit may be stored in a computer-readable storage medium. Based on such an understanding, the technical solutions of the present application substantially, or the part contributing to the current technology, or part of the technical solutions may be implemented in a form of a software product. The computer software product is stored in a storage medium, and includes several instructions for making a computer apparatus installed with the storage medium to perform all or a part of the steps in the methods described in embodiments of the present application.

In the embodiments provided in the present application, the provided computer storage medium may include a read-only memory, a random access memory, an EEPROM, a CD-ROM, another optical disc storage device, a magnetic disk storage device, another magnetic storage device, a flash memory, a USB drive, a portable hard drive, or any other medium capable of storing desired program code in the form of instructions or data structures and accessible by a computer. Additionally, any connection may be appropriately termed a computer-readable medium. For example, if instructions are transmitted from a website, server, or another remote source through coaxial cables, fiber optic cables, twisted pairs, digital subscriber lines (DSLs), or wireless technologies such as infrared, radio, and microwave, these coaxial cables, fiber optic cables, twisted pairs, DSLs, or wireless technologies such as infrared, radio, and microwave are included in the definition of the medium. However, it should be understood that computer storage medium and data storage medium do not include connections, carrier waves, signals, or other transitory medium but are directed to non-transitory, tangible storage medium. As used in the present application, magnetic disks and optical discs include compact discs (CD), laser discs, optical discs, digital versatile discs (DVDs), floppy disks, and Blu-ray discs, where magnetic disks typically reproduce data magnetically, while optical discs reproduce data optically by using lasers.

In summary, for the method and system for meshing an implicit representation model, the computer apparatus, the computer-readable storage medium, and the computer program product disclosed in the present application, in a process of meshing a bounding space that can fully bounds an implicit representation model level-by-level, a next-level meshing is performed only on each sub-mesh whose value interval contains a threshold interval until each sub-mesh at the current level satisfying a preset resolution, and a sub-mesh whose value interval of an implicit representation contains the threshold interval can be selected from the sub-meshes that satisfy the preset resolution as a key mesh so as to perform numerical filling and to generate a meshing model, such that the amount of computation for converting the implicit representation model (referred to as implicit model for short) to the mesh model can be reduced and the computational speed of converting the implicit representation model to the mesh model can be improved. Further, the computer apparatus may accurately determine a key mesh on the implicit representation model by comparing a distance between a center point of a key mesh and the implicit representation model and a reference distance, and may accurately determine whether the key mesh is outside the implicit representation model or inside the implicit representation model by comparing an output value of an implicit representation for the center point of the key mesh and a boundary value, so as the generated voxel mesh model can be more accurate. In addition, the data amount of the generated mesh model can be reduced through not to perform numerical filling in a non-key mesh.

The above embodiments only schematically describe the inventive essence and obtained beneficial effects of the present application, and not used to limit the present application. Any person skilled in the art may make modifications or changes to the above embodiments without departing from the principles and scope of the present application. Therefore, all equivalent modifications or changes implemented by a person of ordinary skill in the technical field without departing from the spirit and technical concept disclosed in the present application shall still fall within the claims of the present application.

## Claims

1. A method for meshing an implicit representation model, **characterized in that** the method comprises the following steps:
creating a bounding space with a preset resolution, the bounding space fully bounds an implicit representation model;
meshing the bounding space level-by-level, including: determining a value interval of an implicit representation for each of sub-meshes at a current level to perform a next-level meshing on each sub-mesh whose value interval contains a threshold interval in a recursive manner until all sub-meshes at a current level satisfying the preset resolution; and
selecting a sub-mesh whose value interval of the implicit representation contains the threshold interval from the sub-meshes that satisfy the preset resolution as a key mesh to perform numerical filling and generate a meshing model.

2. The method for meshing an implicit representation model according to claim 1, wherein the step of creating a bounding space with a preset resolution comprises: creating the bounding space and configuring the preset resolution based on length, width, and height of a bounding box of the implicit representation model and mesh parameters.

3. The method for meshing an implicit representation model according to claim 2, further comprising a step of providing a parameter configuration window for a user to input the mesh parameters.

4. The method for meshing an implicit representation model according to claim 2 or 3, wherein the mesh parameters comprise a minimum cell size of a mesh or a number of minimum cells of the bounding space in each of length, width, and height directions.

5. The method for meshing an implicit representation model according to claim 1, wherein the next-level meshing is configured to traverse length, width, and height directions of each sub-mesh at the current level to perform meshing on each sub-mesh at the current level in a uniform subdivision manner in a direction in which uniform subdivision is feasible.

6. The method for meshing an implicit representation model according to claim 1, wherein the step of determining a value interval of an implicit representation for each of sub-meshes at a current level to perform a next-level meshing on each sub-mesh whose value interval contains a threshold interval comprises: determining the value interval of the implicit representation for each sub-mesh at the current level, comparing the value interval for each sub-mesh with the threshold interval, and performing the next-level meshing on corresponding sub-mesh when the value interval for the corresponding sub-mesh contains the threshold interval.

7. The method for meshing an implicit representation model according to claim 6, wherein the step of determining the value interval of the implicit representation for each sub-mesh at the current level comprises: determining the value interval for each sub-mesh based on diagonal vertices of the sub-mesh.

8. The method for meshing an implicit representation model according to claim 7, wherein the step of determining the value interval for each sub-mesh based on diagonal vertices of the sub-mesh comprises: determining a spatial diagonal length of the sub-mesh based on the diagonal vertices of the sub-mesh and determining the value interval for the sub-mesh based on the spatial diagonal length and an output value of the implicit representation for a center point of the sub-mesh.

9. The method for meshing an implicit representation model according to claim 6, wherein the step of determining a value interval of an implicit representation for each of sub-meshes at a current level to perform a next-level meshing on each sub-mesh whose value interval contains a threshold interval further comprises: filling the corresponding sub-mesh with one or more numbers representing being outside the implicit representation model when the value interval is greater than the threshold interval, and filling the corresponding sub-mesh with one or more numbers representing being inside the implicit representation model when the value interval is less than the threshold interval.

10. The method for meshing an implicit representation model according to claim 6 or 9, wherein the threshold interval is configured as a boundary value of the implicit representation, it is determined that the value interval is greater than the threshold interval when a lower limit value of the value interval is greater than the boundary value, and it is determined that the value interval is less than the threshold interval when an upper limit value of the value interval is less than the boundary value.

11. The method for meshing an implicit representation model according to claim 6 or 9, wherein the threshold interval is configured as an interval with a first threshold as an upper limit and a second threshold as a lower limit and containing a boundary value of the implicit representation, it is determined that the value interval is greater than the threshold interval when the lower limit value of the value interval is greater than the first threshold, and it is determined that the value interval is less than the threshold interval when the upper limit value of the value interval is less than the second threshold.

12. The method for meshing an implicit representation model according to claim 1, wherein the step of meshing the bounding space level-by-level further comprises performing an initial meshing on the bounding space to obtain a plurality of sub-meshes being initially meshed.

13. The method for meshing an implicit representation model according to claim 1, wherein the step of performing numerical filling comprises: selecting at least one representative point from the key mesh to acquire an output value of the implicit representation for the at least one representative point, and filling the output value into a corresponding position in the key mesh.

14. The method for meshing an implicit representation model according to claim 13, wherein the representative point is configured as a center point of the key mesh.

15. The method for meshing an implicit representation model according to claim 13, wherein the step of generating a meshing model comprises converting the filled key mesh to a triangular mesh by using a preset algorithm to generate the meshing model represented by the triangular mesh.

16. The method for meshing an implicit representation model according to claim 1, wherein the step of performing numerical filling comprises:
determining a distance between a center point of the key mesh and the implicit representation model and comparing the distance with a reference distance, wherein the reference distance is configured as half a distance between diagonal vertices of the key mesh; and
filling the key mesh with one or more numbers representing being on the implicit representation model when the distance is less than or equal to the reference distance; or, determining the one or more numbers to be filled in the key mesh when the distance is greater than the reference distance.

17. The method for meshing an implicit representation model according to claim 16, wherein the step of determining the one or more numbers to be filled in the key mesh when the distance is greater than the reference distance comprises:
determining an output value of the implicit representation for the center point of the key mesh and comparing the output value with a boundary value of the implicit representation; and
filling the key mesh with the one or more numbers representing being outside the implicit representation model when the output value is greater than the boundary value; or, filling the key mesh with the one or more numbers representing being inside the implicit representation model when the output value is less than the boundary value.

18. A system for meshing an implicit representation model, **characterized in that** the system comprises:
a bounding space creation module, configured to create a bounding space with a preset resolution, the bounding space fully bounds an implicit representation model;
a meshing and filling module, configured to mesh the bounding space level-by-level, including: determining a value interval of an implicit representation for each of sub-meshes at a current level to perform a next-level meshing on each sub-mesh whose value interval contains a threshold interval in a recursive manner until all sub-meshes at a current level satisfying the preset resolution; and further configured to select a sub-mesh whose value interval of the implicit representation contains the threshold interval from the sub-meshes that satisfy the preset resolution as a key mesh and perform numerical filling; and
a conversion module, configured to generate a meshing model based on the meshed and filled bounding space.

19. A computer apparatus, **characterized in that** the computer apparatus comprises:
a storage device, configured to store at least one program; and
a processing device, connected with the storage device, and configured to implement the method for meshing an implicit representation model according to any one of claims 1 to 17 when invoking the at least one program from the storage device and executing the at least one program.

20. A computer-readable storage medium, **characterized in that** the computer-readable storage medium stores at least one program, wherein the method for meshing an implicit representation model according to any one of claims 1 to 17 is implemented when the at least one program is invoked and executed by a processor of a computer.

21. A computer program product, **characterized in that** when the computer program product is executed on a computer, the computer performs the method for meshing an implicit representation model according to any one of claims 1 to 17.
